# EUROPEAN PATENT APPLICATION

(11) **EP 4 667 174 A1**
(43) Date of publication of application: **24.12.2025**
(21) Application number: 24305984.7
(22) Date of filing: 21.06.2024
(51) Int. Cl.: B28B 19/00, B28B 7/34, C04B 28/14

(54) **A METHOD FOR FORMING A BOARD WITH A DEPRESSION**

(71) Applicant: SAINT-GOBAIN PLACO, 92400 Courbevoie (FR)
(72) Inventor: STANOSSEK, Tilo, 40459 Dusseldorf (DE); HERVIO, Valentine, 92400 Courbevoie (FR); JAFFEL, Hamouda, 92400 Courbevoie (FR); NASCIMENTO DE FARIAS, Bianca, 92400 Courbevoie (FR)
(74) Representative: Murgitroyd & Company

(57) **Abstract**

A method of making a cementitious board having a depression is disclosed. The method comprises providing a cementitious slurry, a facing, and a gel; depositing the gel onto the facing; casting the slurry onto the gel and facing to form a board precursor; and drying the board precursor to form a cementitious board having a depression. A cementitious board with a depression is also described.

## Description

### Field of the Disclosure

The present disclosure relates generally to a method for forming a board with a depression, and finds particular, although not exclusive, utility in providing a method for forming a gypsum board with a depression. A board with a depression is also considered.

### Background

A gypsum plasterboard or wall board comprises an inner layer of gypsum (calcium sulphate dihydrate form) sandwiched between two outer layers of liner. Often, the liner is paper. Gypsum board is produced by feeding calcined gypsum (hemihydrate form), also known as stucco, into a continuous mixer with water and additives. The slurry produced is then placed on a single liner, or between continuous layers of liner, to form a board precursor, this board precursor then passed through an extrusion system that compresses it to the desired thickness. As this board precursor moves along the conveyor line, the calcium sulfate hemihydrate rehydrates to its original dihydrate form. During this process, the board precursor is initially soft, but then the board core quickly sets and hardens. At the same time, the liner becomes chemically and mechanically bonded to the board core. Subsequently, the board precursor is cut to length and dried to drive off the excess water content to produce a rigid drywall/plasterboard.

Plasterboards are typically used to line walls and ceilings, and are secured to walls and ceilings in a side-by-side relation. The joint between the boards is typically covered with a mesh tape and a jointing compound is then applied to the arrangement of boards to cover the joints therebetween and thus provide a smooth finish. This obviates the requirement to plaster the entire board, or to have a large joint. However, to reduce the finishing time and quantity of finishing plaster used to obtain a smooth finish, plasterboards are also formed with a longitudinal tapered edge such that the mesh tape is applied at the tapered region and the tapered region is then filled to cover the joints.

In order to form this taper, it is currently necessary to compress the gypsum with a pressing device. This pressing must be performed once the wet gypsum layer has partially set, to prevent the lining from becoming detached from the gypsum and to ensure that the partially set gypsum can retain the pressed shape. EP0482810 discloses that to avoid a lateral shift in the gypsum during compression, the gypsum must be set to a minimum point before the pressure can be successfully applied. The setting must reach the point where the core has attained a sufficient degree of stiffness to allow compression without the gypsum mass moving laterally. EP2604402B1 discloses a pressing assembly for tapered boards with minimised lateral shift.

Methods of forming plasterboards with tapered edges disclosed in the prior art have high energy requirements and require a decrease in the production line speed.

Aspects of the present disclosure seek to provide a method that alleviates these problems with prior known systems.

### Summary

According to a first aspect of the present disclosure, there is provided a method of making a cementitious board having a depression, the method comprising: providing a cementitious slurry, a facing, and a gel; depositing the gel onto the facing; casting the slurry onto the gel and facing to form a board precursor; and drying the board precursor to form a cementitious board having a depression.

In this way, there is provided a method of manufacturing a tapered board without the need for a mechanical compressing step. During the drying of the board precursor, the gel shrinks to form a depression in the board. As the shrinkage of the gel occurs during the drying of the board precursor, the method of the present invention has a lesser effect on the line speed than the mechanical compression method of the prior art.

Preferably, the gel is a hydrogel. In this way, during the drying step, water evaporates from the gel. Water is safer and has a lower environmental impact than other potential solvents.

Preferably, the facing comprises cellulose. More preferably, the facing comprises paper and/or carboard. In this way, a flexible facing with good adherence to the gel is provided, assisting in the provision of a reliable bond between the gel and the facing.

Preferably, the gel comprises a polysaccharide. In this way, where the facing comprises cellulose, the gel has a similar structure to the cellulose of the facing, and therefore provides improved adhesion to the facing. In some embodiments, the polysaccharide is guar gum or xanthan gum. In this way, the gel has increased stability at room temperature. Preferably, the polysaccharide is guar gum. In this way, the gel has improved adhesion to the gypsum and provides increased shrinkage during the drying step.

Preferably, the gel has a viscosity high enough to avoid leaking. Preferably the gel has a viscosity not so high as to compromise the adhesion of the gel to the gypsum and the gel is also not so rigid that it cannot be cut through by the cutter. Preferably, the hydrogel is at least 60 wt.% water.

Preferably, the cementitious slurry comprises calcium sulphate hemihydrate and the cementitious board is a plasterboard. In this way, there is provided an improved method for providing a plasterboard with a depression.

In some embodiments, the plasterboard is a lightweight plasterboard. A lightweight plasterboard is defined as a plasterboard with a density of up to 640 kg/m³ (e.g. 8 kg/m² for a 12.5 mm thick board). In this way, there is provided an improved method for providing a lightweight plasterboard with a depression. The mechanical method of the prior art often caused blistering when used with lightweight boards. It is believed this is due to the mechanical compression of the large pores in the lightweight plasterboards. The present invention provides a method of forming a board with a depression without the need for mechanical compression of the board.

Preferably, the gel is deposited along an edge of the facing. In this way, the facing is only adhered to the cementitious slurry on one side of the gel, which has been found to improve the adhesion of gel to the facing during the drying step.

Preferably, the gel is deposited substantially linearly. In this way, a board with a substantially linear depression is formed.

Preferably, a second facing is applied to the board precursor. Preferably, the second facing comprises cellulose. More preferably, the second facing comprises paper and/or carboard.

Preferably, the method further comprises the step of flipping the board precursor to position the second facing at the bottom of the board precursor before the drying step.

Preferably, the method further comprises cutting the board precursor before the drying step. In this way, the gel and slurry deposition steps can be carried out on facing unwound from a roll in a substantially continuous board production process.

Preferably, the drying step is carried out at a temperature in the range of 80-300°C inclusive. More preferably, the drying step is carried out at a temperature in the range of 80-200°C inclusive.

Preferably, the drying step is carried out for a period of between 45 and 180 minutes inclusive. More preferably, the drying step is carried out for a period of 60 and 120 minutes inclusive.

Preferably, during the drying step, at least 70 wt.% of the gel is lost through evaporation. More preferably, during the drying step, at least 90 wt.% of the gel is lost through evaporation. In this way, the shrinking of the gel, and therefore the size of the depression in the resulting board, is increased.

According to a second aspect of the present invention, there is provided a board with a depression, the board comprising a cementitious layer, a polymer layer and a paper facing, wherein the polymer layer is only found underneath the depression. In this way, there is provided a tapered board made without the need for a mechanical compressing step.

Preferably, the cementitious slurry comprises calcium sulphate hemihydrate and the cementitious board is a plasterboard.

In some embodiments, the plasterboard is a lightweight plasterboard. In this way, the present invention provides a lightweight plasterboard with a depression with reduced blistering.

Further preferred features of the method according to the second aspect, may comprise one or more of the features of the pressing assembly of the first aspect.

### Brief Description of the Drawings

The disclosure will be further described with reference to examples depicted in the accompanying figures in which:
Figure 1 is a is a diagram of a cross section of a board precursor and a board with a depression; and
Figure 2 is a diagram of a cross section of a board precursor and a board with a depression with reduced adhesion between the gel and the paper facing.

### Detailed Description

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

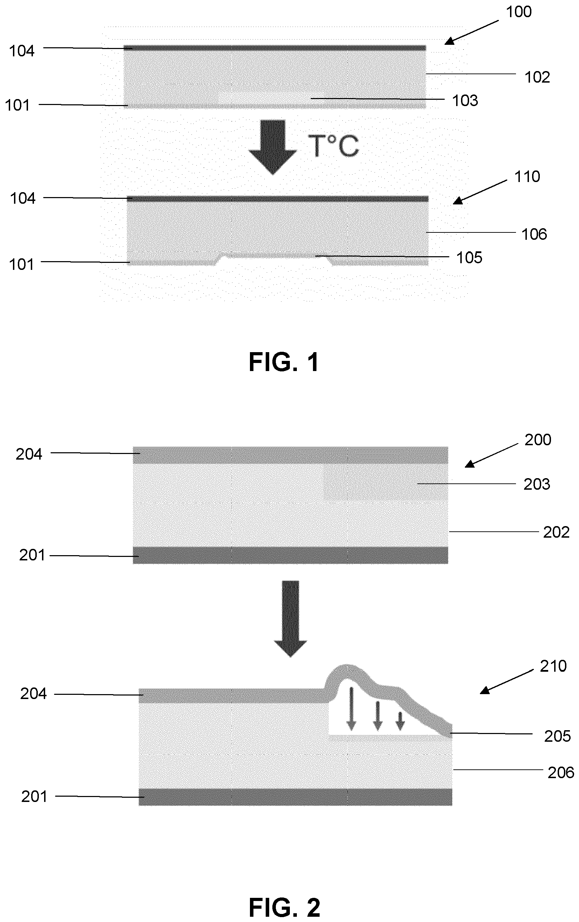

Figure 1 is a diagram of a cross section of a board precursor 100, and a board 110 made using the method of the present invention. The board precursor 100 has a first paper facing 101, a cementitious slurry layer 102, a gel layer 103, and a second paper facing 104. The board precursor 100 is then dried to form the board 110 with the cementitious slurry layer 102 drying to form the cementitious core 106. The gel layer 103 shrinks during the drying step to form a smaller polymer layer between the cementitious core 106 and the paper facing 101, creating the depression 105 in the board 110.

Figure 2 is a diagram of a cross section of a board precursor 200, and a board 210. The board precursor 200 has a first paper facing 201, a cementitious slurry layer 202, a gel layer 203, and a second paper facing 204. The board precursor 200 is then dried to form the board 210 with the cementitious slurry layer 202 drying to form the cementitious core 206. The gel layer 203 shrinks during the drying step to form the depression 205. The board 210 demonstrates the importance of the adhesion of the gel 203 to the paper facing 201 during the drying step. If the adhesion is not strong enough, there is a gap between the cementitious board and the paper facing.

The following worked examples are presented by way of illustration only.

Hydrogels with guar gum and xanthan gum were tested. Gels were prepared by combining powder with water with a hand mixer for 2 minutes or until no lumps were seen. Guar gum was used in concentrations of 30g/L and the xanthan gum was used in concentrations of 100g/L.

Sample boards were prepared. Gels were deposited along an edge of paper facing within a mould. The mould was used to ensure the thickness and width of the gel layers were consistent. The mould used gave a gel deposition width of 1cm and thickness of 4mm. Cementitious slurry was then deposited over the gel and paper facing and a second paper facing was added on top to form a sample board precursor. The sample board precursors were dried in a stove at 180°C for 30 minutes.

The samples made with the xanthan and guar gum gels both demonstrated shrinkage and formed a plasterboard with a depression.

The boards made with the guar gum gel gave increased shrinkage compared to the boards made with xanthan gum. The boards with guar gum gel also showed improved adhesion of the gel to the gypsum core than the boards made using xanthan gum gel.

Further experiments were carried out with samples made using the gel in the centre of the plasterboard rather than along an edge. When xanthan gum gel was used in the centre, it hardened but did not shrink during the drying step. When guar gum gel was used in the centre, it shrank and so formed a board with a depression. However, the guar gum gel did not bring the paper facing with it as the gel shrank. It is believed this is because the paper facing was restricted by the gypsum on both sides of the gel.

## Claims

1. A method of making a cementitious board having a depression, the method comprising:
providing a cementitious slurry, a facing, and a gel;
depositing the gel onto the facing;
casting the slurry onto the gel and facing to form a board precursor; and drying the board precursor to form a cementitious board having a depression.

2. The method of claim 1, wherein the gel is a hydrogel.

3. The method of claim 2, wherein the gel comprises a polysaccharide.

4. The method of claim 3, wherein the polysaccharide is guar gum or xanthan gum.

5. The method of any preceding claim, wherein the cementitious slurry comprises calcium sulphate hemihydrate and the cementitious board is a plasterboard.

6. The method of claim 5, wherein the plasterboard is a lightweight plasterboard.

7. The method of any preceding claim, wherein the gel is deposited along an edge of the paper facing.

8. The method of any preceding claim, wherein the gel is deposited substantially linearly.

9. The method of any preceding claim, wherein a second facing is applied to the board precursor, and wherein the method further comprises flipping the board precursor to position the second facing at the bottom of the board precursor before the drying step.

10. The method of any preceding claim, wherein the method further comprises cutting the board precursor before the drying step.

11. The method of any preceding claim, wherein the drying step is carried out at a temperature in the range of 80-300°C inclusive.

12. The method of any preceding claim, wherein the drying step is carried out for a period of between 45 and 180 minutes inclusive.

13. The method of any proceeding claim, wherein during the drying step, at least 70 wt.% of the gel is lost through evaporation.

14. The method of any proceeding claim, wherein during the drying step, at least 90 wt.% of the gel is lost through evaporation.

15. A cementitious board with a depression, the board comprising a cementitious layer, a polymer layer and a paper facing, wherein the polymer layer is only found underneath the depression.
